# EUROPÄISCHE PATENTANMELDUNG

(11) **EP 0 974 676 A2**
(43) Veröffentlichungstag der Anmeldung: **26.01.2000**
(21) Anmeldenummer: 99113985.8
(22) Anmeldetag: 19.07.1999
(51) Int. Cl.: C21D 8/00, C21D 9/02, C21D 1/18

(54) **Verfahren zur thermomechanischen Behandlung von Stahl für torsionsbeanspruchte Federelemente**

(30) Priorität: 20.07.1998 DE 19832526; 31.08.1998 DE 19839383
(71) Anmelder: Firma Muhr und Bender, D-57439 Attendorn (DE)
(72) Erfinder: Bilgen, Christian Dr.-Ing., 57072 Siegen (DE); Kast, Eberhard Dr.-Ing., 40699 Erkrath (DE); Kleemann, Andreas Dipl.-Ing., 99631 Weissensee (DE); Krull, Hans-Günther Dr. rer. nat., 47053 Duisburg (DE); Muhr, Thomas Dr.-Ing., 57439 Attendorn (DE); Weiss, Horst Prof. Dr.-Ing., 57250 Netphen (DE)
(74) Vertreter: Patentanwälte Gesthuysen, von Rohr, Weidener, Häckel

(57) **Zusammenfassung**

Die Erfindung betrifft ein Verfahren zur thermomechanischen Behandlung von Stahl für torsionsbeanspruchte Federelemente, wobei das Ausgangsmaterial mit einer Aufheizgeschwindigkeit von wenigstens 50 K/s aufgeheizt und austenitisiert und anschließend in mindestens einem Umformschritt umgeformt wird und wobei das Umformerzeugnis nach der Umformung bis unterhalb der Martensittemperatur zu Martensit abgeschreckt und anschließend angelassen wird.

Um zu einer Verbesserung der Festigkeits- bzw. Zähigkeitseigenschaften des Federstahls zu kommen, und zwar in Beanspruchungsrichtung der torsionsbeanspruchten Federelemente, so daß sich eine beträchtliche Erhöhung der Schwingfestigkeit ergibt, ist erfindungsgemäß vorgesehen, daß das Ausgangsmaterial auf eine Temperatur oberhalb der Rekristallisationstemperatur aufgeheizt und anschließend bei einer solchen Temperatur umgeformt wird, daß sich eine dynamische und/oder statische Rekristallisation des Austenits ergibt, und daß der derart rekristallisierte Austenit des Umformerzeugnisses abgeschreckt wird.

## Beschreibung

Die Erfindung betrifft ein Verfahren zur thermomechanischen Behandlung von Stahl für torsionsbeanspruchte Federelemente, wobei das Ausgangsmaterial mit einer Aufheizgeschwindigkeit von wenigstens 50 K/s aufgeheizt und austenitisiert und anschließend in mindestens einem Umformschritt umgeformt wird und wobei das Umformerzeugnis nach der Umformung bis unterhalb der Martensittemperatur zu Martensit abgeschreckt und anschließend angelassen wird.

Ein Verfahren der eingangs genannten Art ist bereits aus der DE 43 40 568 C2 bekannt. Bei diesem bekannten Verfahren wird Draht als Ausgangsmaterial mit einer Geschwindigkeit zwischen 85 K/s und 100 K/s auf eine Temperatur oberhalb A_{c3}, nämlich bis auf eine Temperatur von 860 °C aufgeheizt und anschließend 10 bis 30 Sekunden gehalten, um einerseits eine restlose Umwandlung der Ferritstruktur in Austenit und andererseits eine homogene Verteilung des Kohlenstoffs im Austenit zu erreichen. Zur Erzielung einer höheren Feinkörnigkeit erfolgt anschließend ein Umformen bei 860 °C, wobei der Draht in einem ersten Walzstich ovalisiert, in einem zweiten Walzstich rundgewalzt und anschließend durch eine Kalibrierdüse getrieben wird. Danach wird der Draht abgeschreckt und wieder angelassen. Die Abschreckung des Austenits zu Martensit erfolgt bei diesem bekannten Verfahren mit einer Gefügestruktur, die nicht rekristallisiert ist. Die Festigkeits- bzw. Zähigkeitseigenschaften des nach diesem bekannten Verfahren hergestellten Drahtes sind im Hinblick auf eine erhöhte, für torsionsbeanspruchte Federelemente erforderliche Schwingfestigkeit verbesserungsfähig.

Aus der DE 195 46 204 C1 ist bereits ein Verfahren zur Herstellung von Federelementen aus einem Vergütungsstahl bekannt, bei dem eine thermomechanische Behandlung des Ausgangsmaterials mit nachfolgenden Schritten durchgeführt wird:
a) Das Ausgangsmaterial des Stahls wird im Austenitgebiet bei Temperaturen von 1050 °C bis 1200 °C lösungsgeglüht,
b) unmittelbar anschließend wird eine erste Umformung oberhalb der Rekristallisationstemperatur durchgeführt,
c) unmittelbar anschließend wird unterhalb der Rekristallisationstemperatur, aber oberhalb der Aᵣ₃-Temperatur eine zweite Umformung durchgeführt,
d) es werden weitere Umform- und Bearbeitungsvorgänge unterhalb der Rekristallisationstemperatur, aber oberhalb der Aᵣ₃-Temperatur durchgeführt, wobei eine minutenlange Haltezeit vorgesehen ist, und
e) anschließend wird das Walzerzeugnis bis unterhalb der Martensittemperatur abgeschreckt und schließlich angelassen.

Die Abschreckung des Austenits zu Martensit erfolgt bei diesem bekannten Verfahren ebenfalls mit einer Gefügestruktur, die durch die Umformungen gemäß den vorgenannten Schritten c) und d) nicht rekristallisiert ist. Da bei diesem bekannten Verfahren nicht nur unterhalb der Rekristallisationstemperatur umgeformt wird, sondern vor dem Abschrecken bei hohen Temperaturen noch längere Haltezeiten vorgesehen sind, ergibt sich im übrigen ein erhebliches Kornwachstum.

Nach Untersuchungen der Anmelderin führt die Anwendung des bekannten Verfahrens zu einem feinnadeligen, jedoch stark texturierten Martensitgefüge mit in Walzrichtung guten Festigkeits- bzw. Zähigkeitseigenschaften. Das bekannte Verfahren ist daher für Federelemente geeignet, die in Walzrichtung einer Zug-/Druckbelastung ausgesetzt sind, wie dies insbesondere bei Blattfedern der Fall ist.

Bei torsionsbeanspruchten Federelementen, wie Schraubenfedern und Stabilisatoren, entspricht die Richtung der maximalen Belastung allerdings nicht der durch das vorgenannte Verfahren erzeugten Vorzugsrichtung maximaler Festigkeit. Daher ist eine thermomechanische Behandlung, die zu einem nicht rekristallisierten, wenig erholten Austenitkorn führt, bei Stählen für torsionsbeanspruchte Federelemente nicht geeignet und führt auch nicht zu einer Verbesserung der Schwingfestigkeit.

Aufgabe der vorliegenden Erfindung ist es daher, ein Verfahren zur thermomechanischen Behandlung von Stahl für torsionsbeanspruchte Federelemente zur Verfügung zu stellen, das zu einer Verbesserung der Festigkeits- bzw. Zähigkeitseigenschaften des Federstahls führt, und zwar in Beanspruchungsrichtung der torsionsbeanspruchten Federelemente, so daß sich eine beträchtliche Erhöhung der Schwingfestigkeit ergibt.

Die zuvor hergeleitete und aufgezeigte Aufgabe ist bei einem Verfahren zur thermomechanischen Behandlung von Stahl für torsionsbeanspruchte Federelemente erfindungsgemäß im wesentlichen dadurch gelöst, daß das Ausgangsmaterial auf eine Temperatur oberhalb der Rekristallisationstemperatur aufgeheizt und anschließend bei einer solchen Temperatur umgeformt wird, daß sich eine dynamische und/oder statische Rekristallisation des Austenits ergibt, und daß der derart rekristallisierte Austenit des Umformerzeugnisses abgeschreckt wird.

Bei dem erfindungsgemäßen Verfahren erfolgt das Aufheizen in den Austenitbereich bis über die Rekristallisationstemperatur in sehr kurzer Zeit, was den Austenitkörnern keine Zeit läßt, zu gröberen Körnern zu wachsen. Durch die anschließende Umformung im entsprechenden Temperaturbereich ergibt sich eine dynamische Rekristallisation (bei der Umformung) und/oder eine statische Rekristallisation (nach der Umformung), was auch als Umkristallisation bezeichnet wird und im Ergebnis zu extrem feinkörnigen Austenitkristalliten führt. Diese ultrafeinen rekristallisierten Kristallite wandeln sich dann bei der nachfolgenden Abschreckung in ein extrem feinnadeliges martensitisches Gefüge um. Nach der Abschreckbehandlung erfolgt schließlich ein Anlassen auf die gewünschte Festigkeits-Zähigkeits-Kombination.

Der Unterschied der Erfindung zum Stand der Technik besteht im Ergebnis also darin, den Austenit rekristallisieren zu lassen, im rekristallisierten Zustand einer Umformbehandlung zu unterziehen, dann eine statische und/oder dynamische Rekristallisation ablaufen zu lassen und schließlich den rekristallisierten Austenit zu Martensit abzuschrecken.

Der durch das erfindungsgemäße Verfahren entstandene Martensit weist gegenüber den Gefügen, die nach den bekannten Verfahren hergestellt worden sind, stark verbesserte Festigkeits- bzw. Zähigkeitseigenschaften auf, und zwar in der Beanspruchungsrichtung von torsionsbeanspruchten Federelementen, so daß sich eine beträchtliche Erhöhung der Schwingfestigkeit ergibt.

Vorzugsweise wird das Ausgangsmaterial mit einer Aufheizgeschwindigkeit zwischen 80 und 150 K/s auf eine Temperat von mindestens 900 °C, vorzugsweise auf eine Temperatur zwischen 900 °C und 1200 °C aufgeheizt. Dieses Aufheizen erfolgt vorzugsweise induktiv.

Ein besonders gutes Ergebnis erreicht man, wenn die Umformung in mindestens zwei Umformschritten oberhalb der Rekristallisationstemperatur erfolgt. Es können auch mehrere Umformschritte oberhalb der Rekristallisationstemperatur durchgeführt werden, vorzugsweise vier Umformschritte. Im übrigen empfiehlt es sich, die Umformung mit einem logarithmischen Gesamtumformungsgrad von mindestens 0,1 durchzuführen.

Durch die zuvor beschriebene mehrmalige statische und dynamische Rekristallisation beim bzw. nach dem Umformen werden die anfänglich feinen Austenitkristallite weiter gefeint.

Um den Austenitkristalliten zwischen den einzelnen Umformschritten keine Zeit zum Wachsen zu geben, ist weiterhin vorgesehen, daß die Haltezeit zwischen den Umformschritten jeweils sehr kurz, jedenfalls geringer als eine Minute ist. Vorzugsweise sind nur einige Sekunden an Haltezeit zwischen den Umformschritten vorgesehen. Die Umformung selbst läuft bei einem bevorzugten Ausführungsbeispiel in einem Temperaturbereich zwischen etwa 1000 °C und 800 °C ab, wobei das Material zwischen aufeinanderfolgenden Umformschritten wieder aufgeheizt werden sollte, um die Rekristallisation zu ermöglichen.

Um das nach dem Abschrecken entstandene Martensitgefüge sogar noch weiter zu verfeinern, ist außerdem vorgesehen, daß das Material erneut rasch austentisiert wird und der so erzeugte Austenit wiederum nach weiterer Umformung oder auch ohne Umformung erneut abgeschreckt wird. Auch eine Kaltverformung vor oder nach dem Anlassen ist ohne weiteres möglich.

Als Ausgangsmaterial wird bei dem erfindungsgemäßen Verfahren insbesondere ein Silizium-Chrom-Stahl mit einem Kohlenstoffgehalt von 0,35 % bis 0,75 % verwendet, der mit Vanadium oder mit einem anderen Legierungselement mikrolegiert ist.

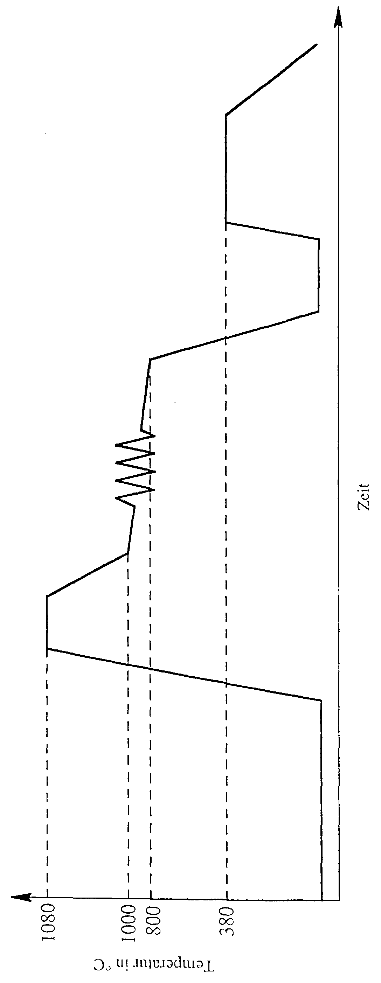

Die einzige Figur zeigt ein Temperatur-Zeit-Diagramm eines Ausführungsbeispiels des erfindungsgemäßen Verfahrens, wobei die Einteilung der Temperaturachse allerdings nicht maßstabsgetreu ist.

Das Ausgangsmaterial wird zu Beginn des Verfahrens von der Ausgangstemperatur innerhalb weniger Sekunden induktiv bis auf 1080 °C mit einer Aufheizgeschwindigkeit zwischen 80 und 150 K/s aufgeheizt. Anschließend wird die Temperatur von 1080 °C eine kurze Zeit lang gehalten; sie fällt dann bis auf etwa 1000 °C. Sodann folgen vier Umformschritte, jeweils in Form von Walzstichen, im Temperaturbereich zwischen etwa 1000 °C und 800 °C, wobei zwischen den Walzstichen nur sehr kurze Haltezeiten vorgesehen sind, um den Austenitkristalliten keine Zeit zum Wachsen zu geben.

Nach jedem Walzstich wird jeweils wieder kurzfristig aufgeheizt, um die Temperatur von etwa 1000 °C zu erreichen. Beim dargestellten Ausführungsbeispiel wird bei der Umformung ein logarithmischer Gesamtverformungsgrad von mindestens 0,1 erreicht. Nach dem letzten Walzstich wird die Temperatur noch kurzfristig auf den Bereich oberhalb 800 °C angehoben und bei einem geringen Temperaturabfall kurz gehalten. Anschließend erfolgt das schnelle Abschrecken bis auf Raumtemperatur mit einer Abschreckgeschwindigkeit größer 50 K/s und das anschließende Anlassen auf eine Temperatur von etwa 380 °C.

Bei dem zuvor beschriebenen Ausführungsbeispiel handelt es sich bei dem Ausgangsmaterial um einen Silizium-Chrom-Stahl, der mit Vanadium mikrolegiert ist und einen Kohlenstoffgehalt von 0,45 % bis 0,65 % aufweist (58SiCrV6). Durch die Austenitisierung und Rekristallisation bei 1080° C und die Umkristallisation bei den vier Walzstichen zwischen 1000 °C und 800 °C konnte ein ehemaliger Austenitkorndurchmesser von 3,6 µm erreicht werden. Für dieses Material wurden auch bei Zugfestigkeiten von 2400 MPa noch Brucheinschnürungen > 40 % gemessen. Für eine Zugfestigkeit von 2280 MPa konnte die Torsionsdauerfestigkeit ohne eine Kugelstrahlbehandlung auf 700 ± 345 MPa gesteigert werden.

Die erreichbare Austenitkorngröße läßt sich bei dem erfindungsgemäßen Verfahren ohne weiteres beeinflussen. Wesentliche Parameter sind hierbei
- die Legierungszusammensetzung, insbesondere der Vanadiumzusatz oder der Zusatz eines anderen Mikrolegierungselements,
- die Austenitisierungstemperatur, die Aufheizzeit und die Haltezeit,
- der Umformtemperaturbereich und die Haltezeit zwischen den Umformschritten,
- die Anzahl der Umformschritte,
- der logarithmische Gesamtumformgrad und
- die Verteilung des Gesamtumformgrades auf die einzelnen Umformschritte.

Bei einem unter Verwendung des gleichen Federstahles (58SiCrV6) durchgeführten Vergleichsversuch ließen sich durch induktive Vergütung Zugfestigkeiten von nur 2150 MPa mit ausreichenden Zähigkeiten (Brucheinschnürungen von > 40 %) erreichen. Dabei erfolgte die Austenitisierung bei 1000 °C und das Anlassen bei 480 °C. Für dieses Material konnte eine Torsionsdauerfestigkeit von 700 ± 320 MPa ermittelt werden. Der ehemalige Austenitkorndurchmesser als Maß zur Beschreibung der Feinheit des Gefüges lag für die untersuchte Variante bei 8,8 µm.

Durch Wahl einer niedrigeren Anlaßtemperatur zur Einstellung noch höherer Werkstoffestigkeiten würde die Verformungsfähigkeit des Materials unter die geforderte Mindestgrenze herabgesetzt und das Material zur Herstellung von Tragfedern somit unbrauchbar.

Im Ergebnis ergibt sich durch die Erfindung im Vergleich zur induktiven Vergütung ein Zuwachs der dauerhaft ertragenen Spannungsamplitude von 8 %. Für höhere Werkstoffestigkeiten sind entsprechend noch bessere Dauerfestigkeiten gegeben.

Schließlich sei noch darauf hingewiesen, daß für das erfindungsgemäße Verfahren auch die Wahl des Ausgangsmaterials von Bedeutung ist. Besonders geeignet ist als Ausgangsmaterial mit Vanadium und/oder einem anderen Legierungselement mikrolegierter Stahl. Im übrigen sollte das Ausgangsmaterial ein solches sein, das nur wenig Einschlüsse und/oder nur Einschlüsse mit einer minimalen Größe aufweist.

## Patentansprüche

1. Verfahren zur thermomechanischen Behandlung von Stahl für torsionsbeanspruchte Federelemente, wobei das Ausgangsmaterial mit einer Aufheizgeschwindigkeit von wenigstens 50 K/s aufgeheizt und austenitisiert und anschließend in mindestens einem Umformschritt umgeformt wird und wobei das Umformerzeugnis nach der Umformung bis unterhalb der Martensittemperatur zu Martensit abgeschreckt und anschließend angelassen wird, **dadurch gekennzeichnet**, daß das Ausgangsmaterial auf eine Temperatur oberhalb der Rekristallisationstemperatur aufgeheizt und anschließend bei einer solchen Temperatur umgeformt wird, daß sich eine dynamische und/oder statische Rekristallisation des Austenits ergibt, und daß der derart rekristallisierte Austenit des Umformerzeugnisses abgeschreckt und angelassen wird.

2. Verfahren nach Anspruch 1, dadurch gekennzeichnet, daß das Ausgangsmaterial mit einer Aufheizgeschwindigkeit zwischen 80 bis 150 K/s auf eine Temperatur von mindestens 900 °C, vorzugsweise zwischen 900 °C und 1200 °C aufgeheizt wird.

3. Verfahren nach einem der Ansprüche 1 oder 2, dadurch gekennzeichnet, daß die Aufheizung induktiv erfolgt.

4. Verfahren nach einem der Ansprüche 1 bis 3, dadurch gekennzeichnet, daß die Umformung in mindestens zwei Umformschritten oberhalb der Rekristallisationstemperatur durchgeführt wird, vorzugsweise in vier Umformschritten durchgeführt wird.

5. Verfahren nach einem der Ansprüche 1 bis 4, dadurch gekennzeichnet, daß die Umformung mit einem logarithmischen Gesamtumformungsgrad von mindestens 0,1 durchgeführt wird.

6. Verfahren nach Anspruch 5, dadurch gekennzeichnet, daß die Haltezeit zwischen zwei Umformschritten geringer als eine Minute ist.

7. Verfahren nach einem der Ansprüche 1 bis 6, dadurch gekennzeichnet, daß die Umformung in einem Temperaturbereich zwischen etwa 1000 °C und 800 °C durchgeführt wird.

8. Verfahren nach einem Ansprüche 4 bis 7, dadurch gekennzeichnet, daß das Material zwischen aufeinanderfolgenden Umformschritten wieder aufgeheizt wird.

9. Verfahren nach einem der Ansprüche 1 bis 8, dadurch gekennzeichnet, daß das Umformerzeugnis nach dem Absehrecken noch mindestens ein weiteres Mal austenitisiert und anschließend wieder abgeschreckt wird.

10. Verfahren nach Anspruch 9, dadurch gekennzeichnet, daß im austenitisierten Zustand eine Umformung mit mindestens einem Umformschritt durchgeführt wird.

11. Verfahren nach einem der Ansprüche 1 bis 10, dadurch gekennzeichnet, daß das Umformerzeugnis vor oder nach dem Anlassen kalt verformt wird.

12. Verfahren nach einem der Ansprüche 1 bis 11, dadurch gekennzeichnet, daß das Umformerzeugnis in einem Temperaturbereich bis unter A_{c3}, vorzugsweise bis 500 °C angelassen wird.

13. Verfahren nach einem der Ansprüche 1 bis 12, dadurch gekennzeichnet, daß als Ausgangsmaterial ein Silizium-Chrom-Stahl mit einem Kohlenstoffgehalt zwischen 0,35 % bis 0,75 %, insbesondere zwischen 0,45 % bis 0,65 % verwendet wird.

14. Verfahren nach Anspruch 13, dadurch gekennzeichnet, daß als Ausgangsmaterial mit Vanadium und/oder einem anderen Legierungselement mikrolegierter Stahl verwendet wird.

15. Verfahren nach einem der Ansprüche 1 bis 14, dadurch gekennzeichnet, daß als Ausgangsmaterial ein solches verwendet wird, das nur wenig Einschlüsse und/oder nur Einschlüsse mit einer minimalen Größe aufweist.
